(19) Europäisches Patentamt
European Patent Office
Office européen des brevets

(11) **EP 4 083 660 A1**

(12) **EUROPÄISCHE PATENTANMELDUNG**

(43) Veröffentlichungstag:
02.11.2022  Patentblatt 2022/44

(21) Anmeldenummer: 22168120.8

(22) Anmeldetag: **13.04.2022**

(51) Internationale Patentklassifikation (IPC):
**G01S 17/58** (2006.01)    **G01S 17/95** (2006.01)

(52) Gemeinsame Patentklassifikation (CPC):
**G01S 17/58; G01S 17/95**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **28.04.2021  DE 102021002239**

(71) Anmelder: **LEONARDO Germany GmbH
41470 Neuss (DE)**

(72) Erfinder:
• **TÖWS, Albert
51674 Wiehl-Brächen (DE)**
• **KURTZ, Alfred
50823 Köln (DE)**
• **GEKAT, Frank
51503 Rösrath (DE)**

(74) Vertreter: **Sparing Röhl Henseler
Patentanwälte
Rethelstrasse 123
40237 Düsseldorf (DE)**

(54) **DOPPLER LIDAR ZUR ERFASSUNG VON WIND- UND/ODER WIRBELSITUATIONEN**

(57)    Doppler Lidar zur Erfassung von Windgeschwindigkeiten mit einer Vorrichtung (MO) zum Erzeugen von gepulstem kohärenten Laserlicht auf N Wellenlängen-Kanälen, wobei separat für jeden einzelnen Wellenlängen-Kanal eine Amplitudenmodulation (AM) zur individuellen Formung des Pulses für jeden Kanal erfolgt, einer Vorrichtung (TK, SC) zur Aussendung von erzeugten, frequenzverschobenen und verstärkten Impulsen des Laserlichts in vorgegebene Raumrichtungen, einem Detektor (n x Det.) zum Empfangen des erzeugten und des rückgestreuten Laserlichts auf N Wellenlängen-Kanälen und einer elektronischen Auswertevorrichtung (n x SV) zum Ermitteln eines Dopplerverschiebungsbetrages zwischen dem Sendelicht und dem Empfangslicht auf N Wellenlängen-Kanälen, wobei den N Wellenlängen-Kanälen ein Timing Modulator (TM) zugeordnet ist zur individuellen Steuerung einer Pulswiederholfrequenz (PRF) und/oder Pulsfolgeperiode (PRT) zusätzlich zur Pulsform für Wellenlängen-Kanäle.

Fig. 9

EP 4 083 660 A1

**Beschreibung**

Die Erfindung betrifft ein Doppler Lidar zur Erfassung von Wind- und/oder Wirbelsituationen.

Wie aus DE 103 16 762 B4 bekannt, besteht bei Wetter-Radar-Systemen das Problem, dass sie für ihre Rückstreumessung große Schwebeteilchen hoher Dichte, wie beispielsweise Wassertropfen in Wolken, benötigen und deshalb nur zur Frühwarnung von Wetterwolken in größerer Entfernung bis zu einigen 10 Kilometern geeignet sind. Die häufigsten Luftströmungen bei klarer Sicht, wie beispielsweise Scherwinde und sogenannte "clear air turbulances" (Klarsicht-Turbulenzen) in der Troposphäre und Jetstreams in der Stratosphäre können dagegen vom Wetter-Radar nicht erfasst werden, da die Wellenlänge von einigen Zentimetern bis Millimetern im Vergleich zur Größe der Luftteilchen relativ lang sind.

Deshalb wurde versucht, LIDAR (Light detection and ranging) Systeme mit kürzeren Wellenlängen und höherer Pulsfrequenz zu entwickeln, die ein zusätzliches Abtasten im optischen Bereich des Spektrums, in dem die kleineren Luftpartikel detektiert werden können, ermöglichen. Um eine hohe Messsicherheit bei allen Wetterbedingungen zu erreichen, wurde zusätzlich zu der Aerosolstreuung auch die Doppler verschobene Rückstreuung an Luftmolekülen verwendet. Bei Doppler Lidarmessungen besteht allerdings das generelle Problem der geringen Intensität der Rückstreuung sowohl von Molekülen als auch von Aerosolen. Um die Laserleistung, die für zuverlässige Messungen notwendig ist, trotzdem gering zu halten, muss ein möglichst empfindlicher Fotodetektor verwendet werden und gleichzeitig der Einfluss von Rauschen durch Hintergrundstrahlung der Atmosphäre und durch elektronisches Rauschen im Detektor und Verstärker effizient unterdrückt werden. Eine Integration schwacher Rückstreusignale über mehrere Sekunden würde verlangen, dass Winde über längere Zeit stabil sind. Derartige Voraussetzungen sind im Allgemeinen jedoch nicht gegeben. Die Signalauswertung muss vielmehr in nur wenigen zehn Millisekunden erfolgen, d. h. in Echtzeit.

Wie aus DE 10 2005 034 729 B3 bekannt, verschaffen die am Boden aufgestellten meteorologischen Messgeräte wie Doppler Radars und Doppler Lidars eine globale Übersicht über die Wetter-, Wind- und Wirbelsituation insbesondere an Flughäfen. Um die Sicherheit von Start und Landung an Flughäfen zu gewährleisten, muss die Windgeschwindigkeit in der Atmosphäre permanent gemessen werden. Weiträumige Messungen bei klarem Wetter können dabei nur mit Doppler Lidars durchgeführt werden.

Auch dies reicht nur zur gemeinsamen Warnung vor kritischen Wind- und WirbelSituationen an allen betroffenen Flugzeugen aus, ohne die Gefährdung einzelner Flugzeuge zu berücksichtigen. Eine zukünftige generelle Kürzung der Start- und Landesequenzen an allen Flughäfen wird erst dann möglich sein, wenn jedes Flugzeug über ein eigenes bordgetragenes Messsystem verfügt, welches einzelne Wirbel und Wirbelschleppen (wake vortex) von startenden oder landenden Flugzeugen auf ihrem Flugweg bei allen Wetterbedingungen rechtzeitig erkennt und ihr Gefahrenpotential durch auftretende Kräfte und Drehmomente unmittelbar bewertet. Doppler Lidars zur Messung in der klaren Atmosphäre sind allerdings nicht so kompakt wie Doppler Radars und insgesamt noch kompliziert.

In dem Artikel "Two-channel direct-detection Doppler lidar employing a chargecoupled device as a detector" von Irgang, Todd D., Applied Optics, Vol. 41, No. 6, vom 20. Februar 2002, wird ein Zweikanal-Doppler-Lidar beschrieben, das ein CCD (charge-coupled device) als Detektor aufweist. Das Lidarsystem misst Windbewegungen mit Hilfe des an Aerosolen und Molekülen zurückgestreuten Lichts in zwei separaten Kanälen, wobei das Licht eines Kanals in den anderen geführt wird. Das Messsystem ist aber nicht hinreichend kompakt ausgestaltet, um die Inhomogenität und Bewegung der Luft in einer ausgedehnten Fläche, d.h. über einen größeren Winkelbereich, zeitgleich längs und quer zur Messachse sichtbar zu machen.

Auch für die großtechnische Nutzung des Winds als erneuerbare Energiequelle ist die Messung von Wind- und Turbulenzverhältnissen für Windfarmen wichtig. Bei Windfarmen ist die Wirksamkeit der Stromerzeugung von der richtigen Aufstellung der Rotoren in Bezug auf örtliche Wind- und Turbulenzverhältnisse abhängig. Für einen effizienten und sicheren Betrieb von Windfarmen ist aus diesen Gründen eine genaue, berührungslose Vermessung des charakteristischen Wind- und Wirbelfelds an dem ausgesuchten Standort bei unterschiedlichen Wetterbedingungen vor ihrem Bau als auch während des Betriebs von besonderer Bedeutung. Die Vermessung dieser Luftdaten mit meteorologischen Messstationen und vereinzelt mit Doppler Lidar-System ist bis heute aufwändig, teuer und ungenau.

Die im Stand der Technik bekannten Doppler Lidar sind insbesondere gepulste kohärente Doppler Lidar-Systeme, die den Doppler-Effekt nutzen, um die Windgeschwindigkeit in einem Raumvolumen zu erfassen. Dazu wird ein Laserimpuls in die Atmosphäre bzw. in Richtung eines beliebigen Messziels ausgesandt. Die reflektierte Strahlung wird erfasst und kohärent mit einem lokalen Oszillator überlagert. Durch die Überlagerung wird das rückgestreute Signal verstärkt und durch die Frequenz des Schwebesignals kann die Dopplerverschiebung ermittelt werden. Um die Signalstärke zu erhöhen sind im Wesentlichen zwei Möglichkeiten gängig. Man kann die Sendeimpulsenergie weiter erhöhen, wodurch die Signalstärke erhöht wird. Ferner kann die Impulswiederholungsrate erhöht werden, um die Anzahl der Mitteilungen pro Zeiteinheit zu erhöhen.

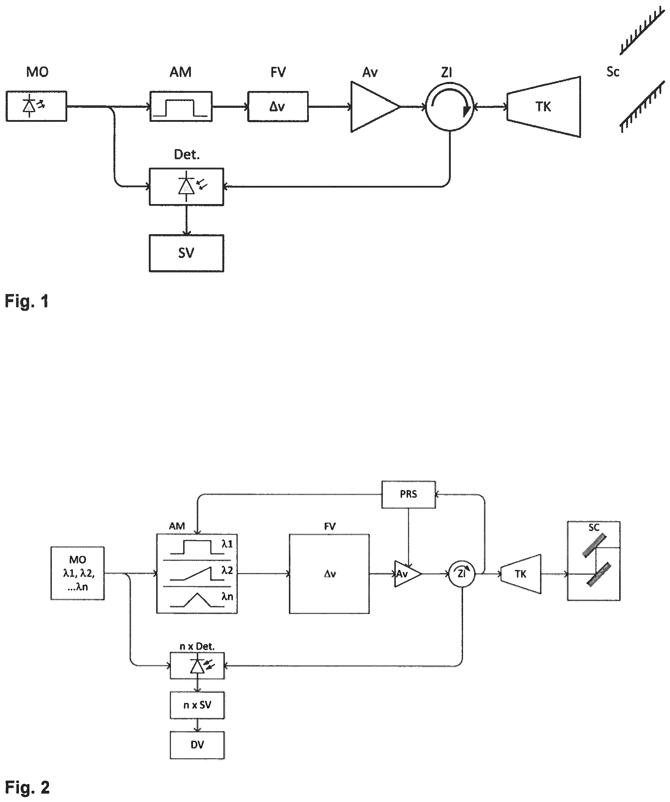

Zur Messung der radialen Windgeschwindigkeit mit einem im Stand der Technik bekannten einkanaligen Doppler Lidar umfasst dieser einen optischen Sender, eine Sende/Empfangsweiche (Duplexer), einen beispielsweise 2-achsigen Scanner, einen Heterodyn-Empfänger und einen Signalprozessor. Ein typischer Aufbau wird im Folgenden unter Bezugnahme auf Fig. 1 beschrieben.

Fig. 1 zeigt eine Konfiguration mit einem Master Oszillator (MO), der ein kontinuierliches Laserlicht erzeugt, das zum einen zur Impulserzeugung genutzt wird und zum anderen als lokaler Oszillator dient. Ein Amplitudenmodulator (AM) erzeugt die Impulse gewünschter Länge und Form. Eine Frequenzverschiebung (FV) wird zusätzlich verwendet, um positive und negative Bewegungsrichtungen zu detektieren. Diese Impulse werden verstärkt (Av) und aufgeweitet in die Atmosphäre gesendet. Ein 2-achsiger Scanner (Sc) gibt die Messrichtung vor. Das mit einem Teleskop (TK) erfasste und in das optische System eingekoppelte Streulicht wird mittels einer Sende-/Empfangsweiche, hier mit Hilfe eines Zirkulators (ZI) zum symmetrischen Detektor (Det.) geleitet und kann hier kohärent (heterodyn) mit dem lokalen Oszillator gemischt werden, wobei lediglich die niederfrequenten Schwebungsfrequenzen von dem Detektor registriert und in der Signalverarbeitung (SV) verarbeitet werden. Aus dieser Schwebungsfrequenz kann die Windgeschwindigkeitskomponente berechnet werden.

Der Zweck eines Doppler Lidars besteht in der raumaufgelösten Messung der Radialgeschwindigkeit des Windes und vorzugsweise der Turbulenz, z.B. an Flughäfen. Das Hauptproblem dabei ist das Erreichen einer hohen Reichweite bei gleichzeitiger hoher Raumauflösung, hoher Messgenauigkeit und hoher Volumen-Scangeschwindigkeit.

Die Reichweite wird durch die Empfindlichkeit des Systems bestimmt, die durch die Lidargleichung gegeben ist:

$$P_{RX} = P_{TX} \frac{c \cdot \tau}{2} \frac{K_{SYS}}{R^2} \beta_A (R, \lambda) L \big[ \alpha (R, \lambda) \big] \qquad \text{Gl. 1}$$

| | | | |
|---|---|---|---|
| PRX: | empfangene Leistung | K_{SYS}: | System konstante (Apertur der Empfangsoptik, Systemeffizienz, Überlappung von Sende- und Empfangsstrahl |
| $P_{TX}$: | Pulsleistung des Senders | | |
| c: | Lichtgeschwindigkeit | | |
| $\tau$: | Pulsdauer | $\beta_A(R,\lambda)$: | Rückstreukoeffizient der Atmosphäre |
| n | Anzahl der Messungen | $L[\alpha(R,\lambda)]$: | Ausbreitungsdämpfungsfunktion |

Gl. 1 beschreibt die Leistung, die nach dem Aussenden eines einzelnen Pulses empfangen wird.

Für technische Betrachtungen ist es oft übersichtlicher, das Signal/Rauschverhältnis (SNR) zu verwenden:

$$\frac{P_{RX}}{N} = SNR = \frac{P_{TX}}{N} \frac{c \cdot \tau}{2} \frac{K_{SYS}}{R^2} \beta_A (R, \lambda) L \big[ \alpha (R, \lambda) \big] \cdot \sqrt{n} \qquad \text{Gl. 2}$$

Um die Empfindlichkeit zu erhöhen, können die Leistungen mehrerer nacheinander ausgesandter Pulse addiert und dann der Mittelwert berechnet werden. Da diese Form der Integration inkohärent ist, erhöht sich der Signal/Rauschabstand des Messwertes für PRX nicht mit der Anzahl n der integrierten Messungen sondern mit $\sqrt{n}$.

Für ein vorgegebenes SNR kann entsprechend die maximale Reichwerte $R_{max}$ berechnet werden, bis zu der das Lidar noch Ziele detektieren kann:

$$R_{max} = \sqrt{\frac{P_{TX}}{N} \frac{c \cdot \tau}{2} \frac{K_{SYS}}{SNR} \cdot \beta_A \cdot L \cdot \sqrt{n}} \qquad \text{Gl. 3}$$

Die Parameter, die den Einfluss des Lidarsenders auf die Empfindlichkeit bzw. die Reichweite des Lidars bestimmen, werden in der Figure of Merit (FOM) des Senders zusammengefasst:

$$FOM = \sqrt{n} P_{TX} \tau \qquad \text{Gl. 4}$$

Damit ergibt sich für die maximale Reichweite:

$$R_{max} = \sqrt{\frac{P_{TX}}{N} \frac{c \cdot \tau}{2} \frac{K_{SYS}}{SNR} \cdot \beta_A \cdot L \cdot \sqrt{n}} = \sqrt{FOM \frac{1}{N} \frac{c}{2} \frac{K_{SYS}}{SNR} \cdot \beta_A \cdot L} \qquad \text{Gl. 5}$$

Die Raumauflösung ΔR beträgt:

$$\Delta R = c \cdot \tau / 2 \qquad \text{Gl. 6}$$

Die Anzahl der Messungen n ergibt sich aus der Pulswiederholfrequenz $f_P$, der effektiven Strahlbreite θ des Systems und der Drehgeschwindigkeit des Scanners $_\omega$:

$$n = \theta \cdot f_P / \omega \qquad \text{Gl. 7}$$

Die Reichweite $R_{ua}$, bis zu der die Messungen noch eindeutig sind, beträgt:

$$R_{ua} = c / (2 \cdot f_P) \qquad \text{Gl. 8}$$

Die maximale Reichweite $R_{nax}$ kann erhöht werden, indem die Sendepulsleistung $P_{TX}$ und/oder die Pulsdauer τ erhöht werden. Beide Parameter werden jedoch durch die optischen Eigenschaften des Verstärkermaterials begrenzt. Eine Verlängerung der Pulsdauer würde zudem die Raumauflösung vergrößern (verschlechtern). Solange nur mit einem einzigen Verstärker gearbeitet wird, kann nur die Anzahl der Messungen n erhöht werden.

Die Sendepulsleistung $P_{TX}$ und die Systemkonstante $K_{SYS}$ sind durch den Stand der kommerziell verfügbaren Technik vorgegeben bzw. können auf die Anwendung hin optimiert werden (Sende/Empfangsoptik). Die für die Messqualität kritischen Zielparameter sind dann noch

- die Raumauflösung ΔR,
- die maximale Reichweite Rmax oder die FOM,
- die eindeutige Reichweite $R_{ua}$.

Die zur Verfügung stehenden Optimierungsparameter sind die Pulsbreite, die Pulswiederholfrequenz $f_P$ (bzw. die Anzahl der Messungen n) und die Pulsform (Rechteck, Gauß oder Kombination aus beiden). Die Zielparameter verhalten sich bei Variation der Optimierungsparameter gegenläufig, wie die Tabelle 1 zeigt.

**Tabelle 1**

|  | τ erhöhen | $f_P$ erhöhen | Rect → Gauß |
|---|---|---|---|
| ΔR | schlechter | Neutral | Schlechter |
| Rmax, FOM | besser | Besser | Besser |
| Rua | neutral | Schlechter | Neutral |

Das Dilemma eines einkanaligen Systems lässt sich deutlich verringern, wenn statt einem Kanal mehrere Kanäle verwendet werden, von denen jeder seinen Master Oszillator (MO) und Empfänger (Det.) hat, wobei jeder Kanal mit einer optimierten Pulsform arbeitet. Zur stabilen und zuverlässigen Operation von gleichzeitig mehreren Wellenlängen n ist eine Erweiterung mit einem Pulsregelsystem (PRS) notwendig, wie in Fig. 2 dargestellt.

Bei einem System mit mehreren Wellenlängen n stellt jede Wellenlänge einen eigenen Messkanal dar. Verschiedene Kanäle können für unterschiedliche Aufgaben optimiert werden. Diese Optimierungsmöglichkeit existiert bereits, wenn nur zwei Kanäle vorhanden sind.

Der Master Oszillator (MO) erzeugt und verstärkt das kontinuierliche Laserlicht auf N Kanäle. Die Wellenlängen sind so gewählt, dass diese nicht von den Bestandteilen der Atmosphäre absorbiert werden. Der minimale Abstand der Wellenlängen zwischen den Kanälen entspricht den noch trennbaren Wellenlängen mit gängigen optischen Methoden. Der maximale Abstand der Wellenlängen wird durch die Verstärkungsbandbreite, bzw. Verstärkereigenschaften des optischen Verstärkers (Av) festgelegt. Die Anzahl der Wellenlängen-Kanäle ist nicht begrenzt.

Die Amplitudenmodulation (AM) kann sowohl gemeinsam für alle als auch separat für jeden einzelnen Kanal erfolgen. Dabei ist die Impulslänge bzw. -form frei wählbar. Die erzeugten Impulse werden frequenzverschoben (FV).

Die erzeugten und frequenzverschobenen Impulse werden gemeinsam in einem optischen Verstärker (Av) verstärkt. Ein Zirkulator (ZI) leitet die Impulse zum Teleskop (TK), welches den Laserstrahl aller Wellenlängen aufweitet und in die Atmosphäre sendet. Das zurückgestreute Licht aller Wellenlängen-Kanäle wird vom Teleskop wieder aufgefangen und durch den Zirkulator (ZI) zu den Detektoren (n x Det.) geführt. Die Überlagerung mit dem lokalen Oszillator erfolgt für jeden Kanal separat auf dem jeweiligen Detektor (Det.), sodass für jeden Kanal ein separates heterodynes Signal vorliegt. Die Signalverarbeitung (SV) und die Digitalisierung (DV) erfolgen für jeden der n Kanäle zunächst separat.

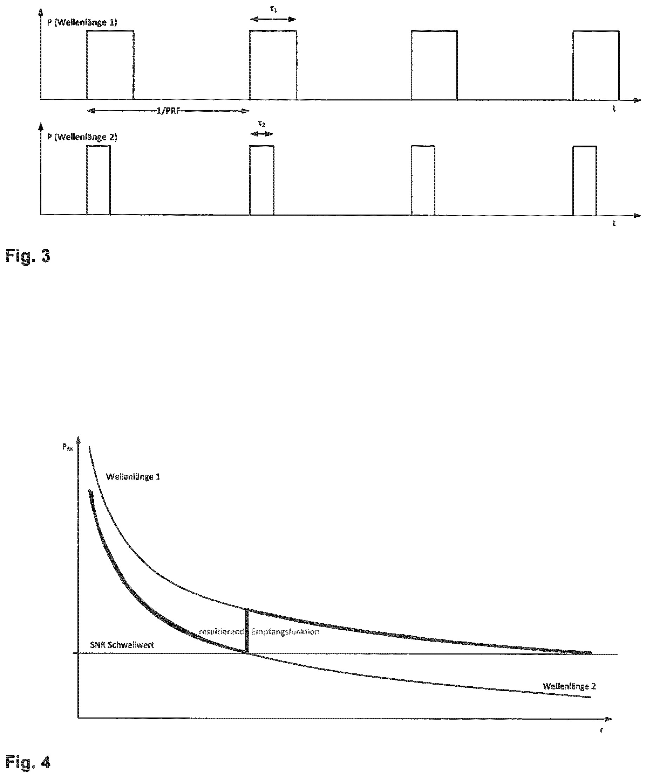

Die Kombinationen von Pulsform, Pulsdauer und Pulsabstand der verschiedenen Wellenlängen bzw. Kanäle wird im Folgenden Wellenform genannt. Die in Fig. 3 gezeigte Wellenform ermöglicht es, gleichzeitig die Reichweite und die Raumauflösung zu optimieren. Mit Wellenlänge 1 werden lange Pulse ausgesendet, die die Empfindlichkeit und damit die Reichweite erhöhen. Wellenlänge 2 arbeitet mit kurzen Pulsen, die eine hohe Raumauflösung ermöglichen, deren Reichweite jedoch geringer ist. Solange eine vordefinierte SNR-Schwelle nicht unterschritten wird, wird der Datenkanal von Wellenlänge 2 genutzt, danach wird auf Wellenlänge 1 umgeschaltet. Auf diese Weise wird im Nahbereich mit hoher Raumauflösung und im Fernbereich mit gröberer Auflösung, aber höherer Reichweite gemessen. In Fig. 3 ist die Wellenform mit zwei Wellenlängen unterschiedlicher Pulsbreiten dargestellt und in Fig. 4 die zugehörige Empfangsfunktion.

Es ist auch möglich, die Signalleistungen beider Kanäle zu addieren, um ein besseres SNR zu erhalten. Die resultierende Raumauflösung ist mindestens so gut wie die des Kanals mit der längeren Pulsbreite. Mit der Addition kann erreicht werden, dass die Empfindlichkeit und damit die Reichweite noch einmal etwas erhöht wird.

Die Wahl der Impulsform hat einen zusätzlichen Einfluss zu einer erhöhten Reichweite bzw. Raumauflösung. Ein Rechteckimpuls hat eine erhöhte Raumauflösung, während ein Gauß-Impuls eine erhöhte Reichweite aufgrund der geringeren Systembandbreite aufweist. Diese Eigenschaften werden zusätzlich verwendet, um den möglichen Messbereich zu erweitern. Dies wird realisiert, indem der Kanal für den Fernbereich ein Gauß-förmiger Puls eingestellt wird und für den Nahbereich-Kanal ein Rechteckimpuls mit möglichst steilen Flanken.

Eine mögliche Pulsform- und Pulslängen-Kombination ist die Faltung zwischen Gauß- und Rechteckpuls unterschiedlicher Pulslängen. In folgender Formel wird dies mit dem Koeffizienten D ausgedrückt, welcher einen Wert von 0 bis 1 annehmen kann.

$$P_W(t) = P_G\big(D \cdot \tau_{FWHM}\big) * P_R\big((1 - D) \cdot \tau_{FWHM}\big)$$

Im Allgemeinen können beliebige Pulsformen oder Kombinationen unterschiedlicher Pulsformen eingesetzt werden, um die systemeigene Pulsbandreite und die Raumauflösung anzupassen.

Bei den Kanälen mit kürzeren Pulsen ergibt sich eine geringere Reichweite, wodurch die Pulswiederholfrequenz bei dem Kanal höher eingestellt werden kann. Eine höhere Pulswiederholfrequenz wirkt sich positiv auf das SNR des jeweiligen Kanals aus.

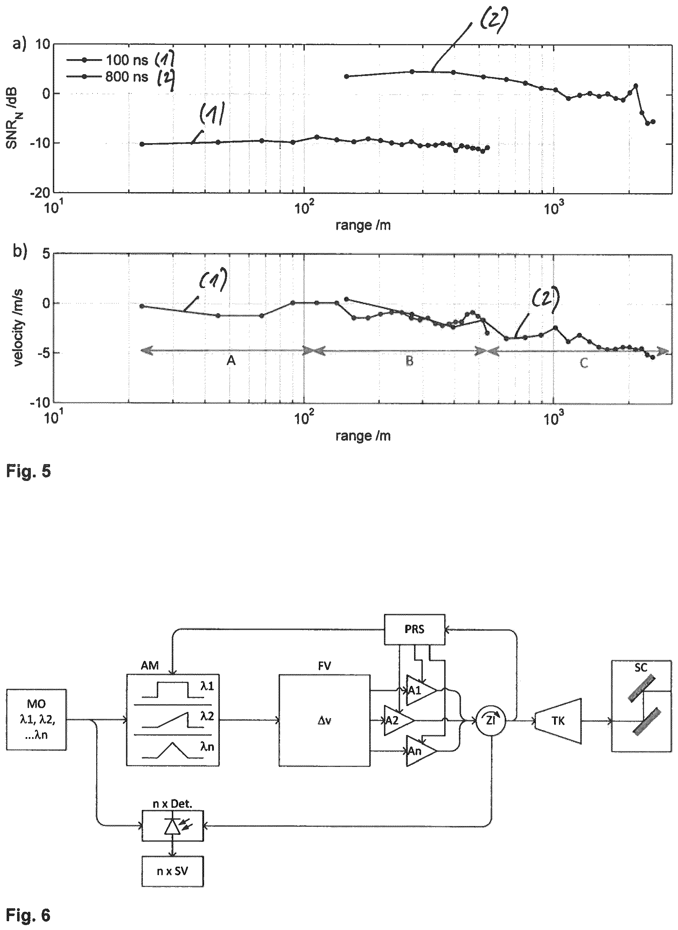

Das Ergebnis einer Beispielmessung ist in Fig. 5 dargestellt. Hierzu wurden zwei Wellenlängen-Kanäle verwendet. Ein Kanal (1) wurde mit einer Pulslänge von 100 ns parametriert, der andere Kanal (2) mit 800 ns Pulslänge. Beide Pulsformen der Wellenlängen waren rechteckförmig und wurden mit gleicher Pulswiederholrate verwendet.

Das SNR des Kanals (1) mit dem kurzen Puls liefert aufgrund der geringeren Energie und höheren Bandbreite ein geringes SNR, welches zu einer geringen Reichweite führt. Dieser Kanal deckt den Nahbereich (Bereich A+B: hier bis 500 m) mit hoher Raumauflösung ab (die volle Raumauflösung ist hier durch den Abstand der Punkte in der Abbildung gegeben). Der Kanal (2) liefert erst nach 150 m brauchbare Daten mit erheblich schlechterer Raumauflösung, aber mit einer erhöhten Reichweite (Bereich B+C: hier bis 2.5 km). Der Schnittbereich (Bereich B) wird von beiden Kanälen gedeckt. Hier liegen Messdaten mit erhöhter Raumauflösung und Geschwindigkeitsauflösung vor.

Einkanalige Systeme würden nur eine der beiden Messreihen liefern. Somit trifft der Anwender konventioneller Verfahren immer einen Kompromiss zwischen minimaler Reichweite, Raumauflösung und maximaler Reichweite.

Eine höhere mittlere Leistung und somit eine höhere Empfindlichkeit ermöglichen individuelle Verstärker (A1), (A2) bis (An) für jeden Kanal. Das System ist in Fig. 6 gezeigt.

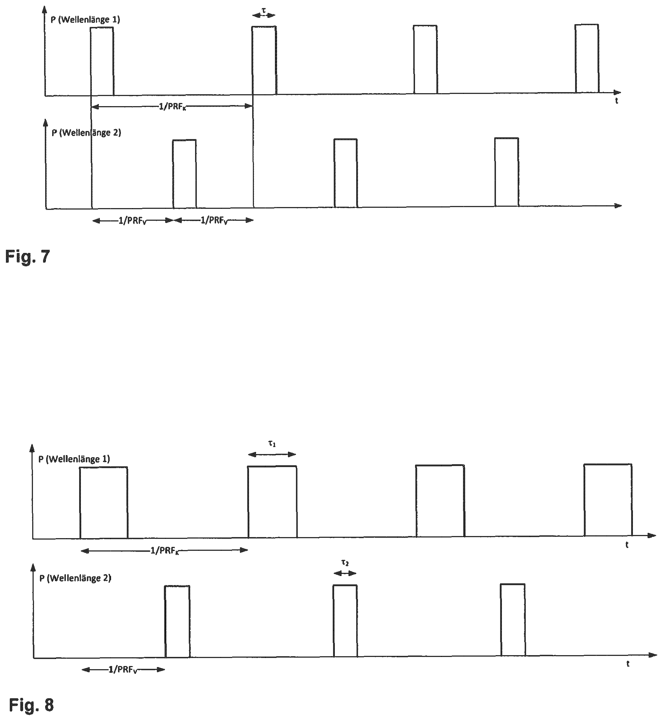

Durch einen zeitlichen Versatz der Sendepulse von Wellenlänge 1 und 2, wie in Fig. 7 gezeigt, kann der Sendeverstärker effizienter verwendet und die PRF verdoppelt werden, sodass sich effektiv PRFv ergibt. Der eindeutige Entfernungsbereich ergibt sich jedoch aus der $PRF_K$ der einzelnen Kanäle.

Durch die Erhöhung der Anzahl der Messwerte wurde die Empfindlichkeit des Lidars und damit seine Reichweite erhöht.

Auch beim Betrieb mit unterschiedlichen Pulsbreiten können die Pulse versetzt ausgestrahlt werden, wie in Fig. 8 gezeigt. Auch hier kann die Effektivität des Sendeverstärkers verbessert werden.

Nachteilig ist, dass die Empfindlichkeit eines Lidars sich zwar über die PRF steigern, lässt, wie Gl. 2 zeigt, eine höhere PRF jedoch den eindeutigen Entfernungsbereich reduziert, und zwar auch bei der Verwendung von mehreren Kanälen mit gegeneinander versetzten Pulsen.

Außerdem muss die Wellenform des Lidars, die sich aus der Superposition der einzelnen Kanäle d.h. der PRF, der Pulsdauer und der Pulsform jedes einzelnen Kanals ergibt, manuell auf jede Wettersituation angepasst werden, was einen automatischen Betrieb erschwert.

Aufgabe der Erfindung ist es daher, ein Doppler Lidar zu schaffen, das atmosphärische Effekte bei klarem Wetter sichtbar macht und dabei gleichzeitig eine Optimierung der Reichweite, der Raumauflösung und der Geschwindigkeitsauflösung ermöglicht. Das Doppler Lidar sollte dabei kompakt aufgebaut sein. Weiterhin sollte für unterschiedliche Anwendungsbereiche die Sendepulsleistung optimiert wählbar sein.

Diese Aufgabe wird durch die Merkmale des Anspruchs 1 gelöst.

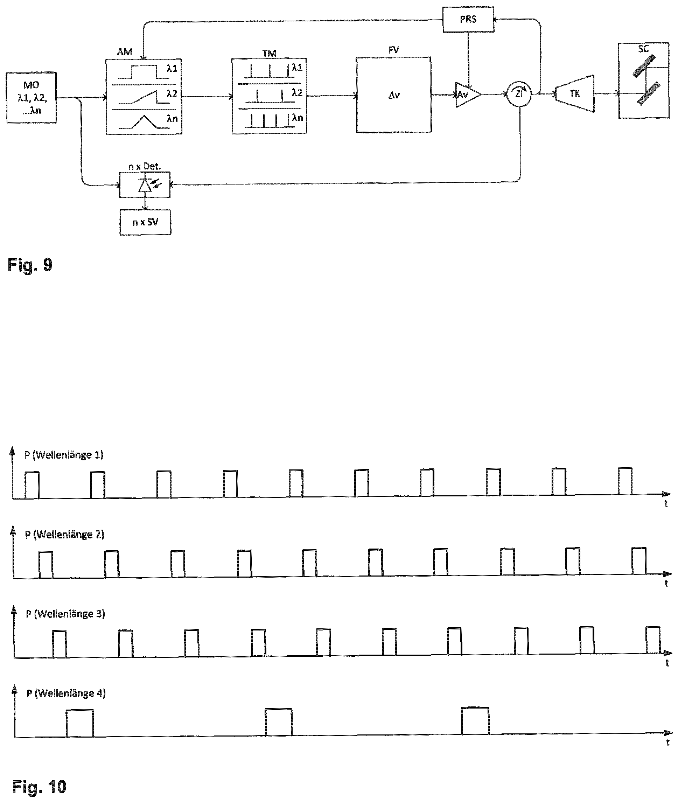

Hierdurch wird ein Doppler Lidar geschaffen, das auf der Verwendung eines Mehr-Wellenlängen Doppler Lidar-System basiert. Fig. 9 zeigt das Blockdiagramm eines solchen Systems. Dieses System kann sowohl als Freistrahloptik oder als Fasertechnik realisiert werden.

Das Doppler Lidar, welches der Gegenstand der Erfindung ist, verwendet mehrere Kanäle N, wobei jeder Kanal zusätzlich zur individuellen Pulsform mit seiner eigenen Pulswiederholfrequenz PRF (Pulse Repetition Frequency) bzw. Impulsfolgeperiode PRT (Pulse Repetion Time) arbeiten kann. Der Stand der Technik beschreibt nur den Betrieb mit gleicher aber gegeneinander versetzter PRT für jeden Kanal. Die individuelle Steuerung der PRF/PRT wird gesteuert durch den Timing Modulator (TM). Die Abtastung wird optimiert, weil jeder Kanal seinen eigenen eindeutigen Entfernungsbereich hat. So ist es z.B. möglich, mehrere Kanäle mit einer sehr hohen PRF zu betreiben, um eine hohe Empfindlichkeit zu erreichen, wobei ein Kanal parallel mit niedriger PRF läuft, um zu prüfen, ob die mit hoher PRF laufenden Kanäle Ziele in Überreichweite (2nd trip echoes) erfassen.

Erfindungswesentlich ist somit die Verwendung unterschiedlicher Pulswiederholungsfrequenzen/Pulsabständen für jeden Kanal.

Vorzugsweise ist jeder der mehreren Kanäle zusätzlich zur individuellen Pulsform mit seinem eigenen Frequenzmodulator ausgestattet. Der Frequenzmodulator kann jeden Kanal individuell abschalten. Die Verwendung von individuellen Frequenzmodulatoren für jeden Kanal ermöglicht eine Erweiterung der messbaren Bereiche der Windgeschwindigkeiten.

Weiter vorzugsweise erfolgt die Verwendung einer adaptiven/kognitiven Wellenformoptimierung. Das Lidar kann seine eigenen Messdaten verwenden, um seine Wellenform selbst zu optimieren. Die Optimierung kann auch unter Zuhilfenahme externer Sensoren geschehen.

Weitere Ausgestaltungen der Erfindung sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

Fig. 1 zeigt ein Blockdiagramm eines einkanaligen Doppler Lidars nach dem Stand der Technik,

Fig. 2 zeigt ein Blockdiagramm eines mehrkanaligen Doppler Lidars mit individueller Pulsform nach dem Stand der Technik,

Fig. 3 zeigt Wellenformen mit zwei Wellenlängen unterschiedlicher Pulsbreiten nach dem Stand der Technik,

Fig. 4 zeigt eine Empfangsfunktion nach Fig. 3,

Fig. 5 zeigt eine Beispielmessung mit zwei Wellenlängen-Kanälen,

Fig. 6 zeigt ein Blockdiagramm eines mehrkanaligen Doppler Lidars mit individueller Pulsform und individuellen Verstärkern nach dem Stand der Technik,

Fig. 7 zeigt den zeitlichen Versatz der Sendepulse von Wellenlängen 1 und 2 nach dem Stand der Technik,

Fig. 8 zeigt den zeitlichen Versatz der Sendepulse von Wellenlängen 1 und 2 mit unterschiedlichen Pulsbreiten nach dem Stand der Technik,

Fig. 9 zeigt ein Blockdiagramm eines mehrkanaligen Doppler Lidars mit individueller Pulsform und eigener Pulswiederholfrequenz(PRF)/Pulsabständen (PRT) gemäß einem ersten Ausführungsbeispiel der Erfindung,

Fig. 10 zeigt ein Beispiel nach Fig. 9 für ein individuelles Timing mit vier Kanälen,

Fig. 11 zeigt ein Blockdiagramm eines mehrkanaligen Doppler Lidars mit individueller Pulsform, vorzugsweise eigener Pulswiederholfrequenz(PRF)/Pulsabständen (PRT) (nicht dargestellt) und individueller Frequenzmodulation gemäß einem zweiten Ausführungsbeispiel der Erfindung,

Fig. 12 zeigt ein Blockdiagramm nach Fig. 11 mit Optimierung der Wellenform gemäß einem dritten Ausführungsbeispiel der Erfindung,

Fig. 13.1 bis 13.4 zeigen nicht optimierte und optimierte Pulsfolgen für jeweils zwei/vier Kanäle gemäß der Erfindung,

Fig. 14 zeigt ein Blockdiagramm eines mehrkanaligen Doppler Lidars mit individueller Pulsform, eigener Pulswiederholfrequenz(PRF)/Pulsabständen (PRT), individueller Frequenzmodulation und Optimierung der Wellenform durch Selbstoptimierung gemäß einem vierten Ausführungsbeispiel der Erfindung,

Fig. 15 zeigt ein Blockdiagramm eines mehrkanaligen Doppler Lidars mit individueller Pulsform, eigener Pulswiederholfrequenz(PRF)/Pulsabständen (PRT), individueller Frequenzmodulation und Optimierung der Wellenform durch Selbstoptimierung und/oder Optimierung unter Zuhilfenahme externer Sensoren oder numerischer Modellen gemäß einem fünften Ausführungsbeispiel der Erfindung,

Fig. 16 zeigt ein Blockschaltbild entsprechend Fig. 16 und individuellen Verstärkern gemäß einem sechsten Ausführungsbeispiel.

Die Erfindung betrifft ein Doppler Lidar mit mehreren Wellenlängen, wie in Fig. 9 gemäß einem ersten Ausführungsbeispiel dargestellt ist.

Bei dem System mit mehreren Wellenlängen n stellt jede Wellenlänge einen eigenen Messkanal dar. Verschiedene Kanäle können für unterschiedliche Aufgaben optimiert werden.

Der Master Oszillator (MO) erzeugt und verstärkt das kohärente Laserlicht auf N Kanäle. Erzeugt werden vorzugsweise kohärente Lichtpulse, bei denen es sich insbesondere um ultrakurze Lichtpulse handelt. Die Wellenlängen sind so gewählt, dass diese nicht von den Bestandteilen der Atmosphäre absorbiert werden. Der minimale Abstand der Wellenlängen zwischen den Kanälen entspricht den noch trennbaren Wellenlängen mit gängigen optischen Methoden. Der maximale Abstand der Wellenlängen wird durch die Verstärkungsbandbreite bzw. Verstärkereigenschaften des optischen Verstärkers (Av) festgelegt. Die Anzahl der Wellenlängen-Kanäle ist nicht begrenzt.

Vorzugsweise liegen die Wellenlängen im nahinfraroten Spektrum (1,55 μm). Aufgrund dieser charakteristischen Wellenlänge wird das Signal beim Durchgang durch die Atmosphäre an Aerosolteilchen und Wolkentröpfchen gestreut. Ein Teil des zurückgestreuten Infrarotsignals wird vom Doppler-Lidar Detektor empfangen. Ursache für detektierte Frequenzverschiebungen ist die natürliche Bewegung der rückstreuenden Aerosol- und Wolkenteilchen (Doppler-Effekt), woraus der Radialwind abgeleitet wird.

Die Amplitudenmodulation (AM) kann sowohl gemeinsam für alle als auch separat für jeden einzelnen Kanal erfolgen. Dabei ist die Impulslänge bzw. -form frei wählbar. Die erzeugten Impulse werden frequenzverschoben (FV).

Die erzeugten und frequenzverschobenen Impulse werden gemeinsam in einem optischen Verstärker (Av) verstärkt. Ein Zirkulator (ZI) leitet die Impulse zum Teleskop (TK), welches den Laserstrahl aller Wellenlängen aufweitet und in die Atmosphäre sendet. Das zurückgestreute Licht aller Wellenlängen-Kanäle wird vom Teleskop wieder aufgefangen und durch den Zirkulator (ZI) zu den Detektoren (n x Det.) geführt. Die Überlagerung mit dem lokalen Oszillator erfolgt für jeden Kanal separat auf dem jeweiligen Detektor (Det.), sodass für jeden Kanal ein separates heterodynes Signal vorliegt. Die Signalverarbeitung (SV) und eine eventuelle Digitalisierung (DV) erfolgt für jeden der n Kanäle zunächst separat.

Die Kombinationen von Pulsform, Pulsdauer und Pulsabstand der verschiedenen Wellenlängen bzw. Kanäle wird im Folgenden Wellenform genannt.

Das Doppler Lidar, welches der Gegenstand der Erfindung ist, verwendet mehrere Kanäle N, wobei jeder Kanal zusätzlich zur individuellen Pulsform mit seiner eigenen Pulswiederholfrequenz PRF (Pulse Repetition Frequency) bzw. Impulsfolgeperiode PRT (Pulse Repetion Time) arbeiten kann. Die individuelle Steuerung der PRF/PRT wird gesteuert durch den Timing Modulator (TM). Die Abtastung wird optimiert, weil jeder Kanal seinen eigenen eindeutigen Entfernungsbereich hat. So ist es z.B. möglich, mehrere Kanäle mit einer sehr hohen PRF zu betreiben, um eine hohe Empfindlichkeit zu erreichen, wobei ein Kanal parallel mit niedriger PRF läuft, um zu prüfen, ob die mit hoher PRF laufenden Kanäle Ziele in Überreichweite (2nd trip echoes) erfassen. Ein Beispiel für individuelles Timing zeigt Fig. 10.

Das Doppler Lidar gemäß der Erfindung kann folglich zeitgleich unterschiedliche Wiederholfrequenzen, Impulsformen und -dauern erzeugen und auswerten. Dabei können alle N Kanäle miteinander mit unterschiedlichen Algorithmen kombiniert oder verglichen werden. Eine Erhöhung der Raumauflösung bei gleichzeitiger Erhöhung der Reichweite mittels unterschiedlicher Pulswiederholraten, Pulsformen und Pulsabständen ist das Ergebnis.

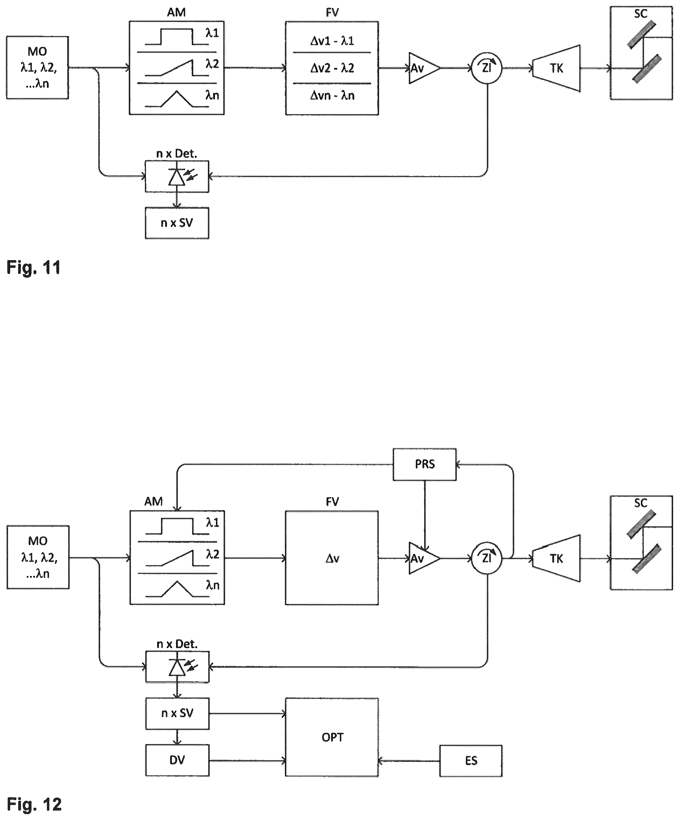

Fig. 11 zeigt ein zweites Ausführungsbeispiel der Erfindung mit individuellen Frequenzmodulatoren. Das Doppler Lidar, welches der Gegenstand der Erfindung ist, verwendet mehrere Kanäle N, wobei jeder Kanal zusätzlich zur individuellen Pulsform mit seinem eigenen Frequenzmodulator ausgestattet ist. Dies wird gesteuert durch den Frequenzmodulator FV. Der Frequenzmodulator kann jeden Kanal individuell abschalten, wodurch in den Pausenzeiten des Kanals zwischen den Pulsen kein Störlicht in das System gelangt. Außerdem kann für jeden Kanal ein anderer Frequenzoffset (Δv1, Δv2, ...) gewählt werden, wodurch sich der eindeutige Bereich der Windgeschwindigkeiten, die das Lidar messen kann, erweitert. Vorzugsweise verwendet dieses Doppler Lidar-System auch den Timing Modulator (nicht dargestellt), wie zu Fig. 9 beschrieben.

Fig. 12 zeigt ein drittes Ausführungsbeispiel der Erfindung mit einer automatischen Optimierung der Wellenform. Das Doppler Lidar, welches der Gegenstand der Erfindung ist, verwendet mehrere Kanäle N, wobei die individuelle Pulsform der Kanäle bzw. die Wellenform automatisch an die jeweilige Messsituation und - aufgabe angepasst wird. Die Situation wird bestimmt durch den aktuellen Zustand der Umwelt (z.B. Aerosoldichte, Wetterlage, Temperatur, Luftdruck, Luftfeuchtigkeit). Der Zustand kann durch externe Sensoren ES erfasst oder aus der Signal- bzw. Datenverarbeitung SV, DV des Lidars abgeleitet werden. Die Sensordaten werden von einem Optimierer OPT erfasst. Der Optimierer kann aufgrund historischer Daten und bekannter physikalischer Zusammenhänge die optimale Wellenform ermitteln. Er ist außerdem in der Lage, durch Variation der Wellenform diese selbstständig zu optimieren. Hierfür können z.B. bekannte Techniken der künstlichen Intelligenz (KI) bzw. des Machine Learning eingesetzt werden.

So messen beispielsweise kürzere Pulse effektiver bei erhöhter Turbulenz. Somit wären bei erhöhter Turbulenz in der Atmosphäre mit kürzeren Pulsen mit höherer PRF mit einer höheren Reichweite zu rechnen. Durch unterschiedliche PRFs ließ sich dann auch noch durch "second trip recovery" die eindeutige Reichweite erhöhen.

Die technische Wirkung der vorstehend beschriebenen und vorzugsweise erfindungsgemäß ausgebildeten Merkmale liefern zusammengefasst die in Tabelle 2 aufgeführten Vorteile/Wirkungen. Die erfindungsgemäßen Merkmale können unabhängig voneinander kombiniert werden. Vorzugsweise sind sie gemeinsam verwirklicht.

**Tabelle 2**

| Erfindungsgemäße Merkmale | Wirkungen der erfindungsgemäßen Merkmale |
|---|---|
| Individuelle PRF/PRT | Höherer eindeutiger Entfernungsbereich durch unterschiedliche PRFs (second trip detection) |
| Individuelle Frequenzmodulatoren | Erhöhung der Empfindlichkeit durch Ausschalten der Kanäle in Ihren Pausenzeiten<br>Erhöhung des eindeutigen Geschwindigkeitsbereichs durch unterschiedliche Frequenzoffsets |
| Automatische Optimierung der Wellenform | Eingriffe des Benutzers und der operationelle Betreuungsaufwand werden drastisch reduziert. |

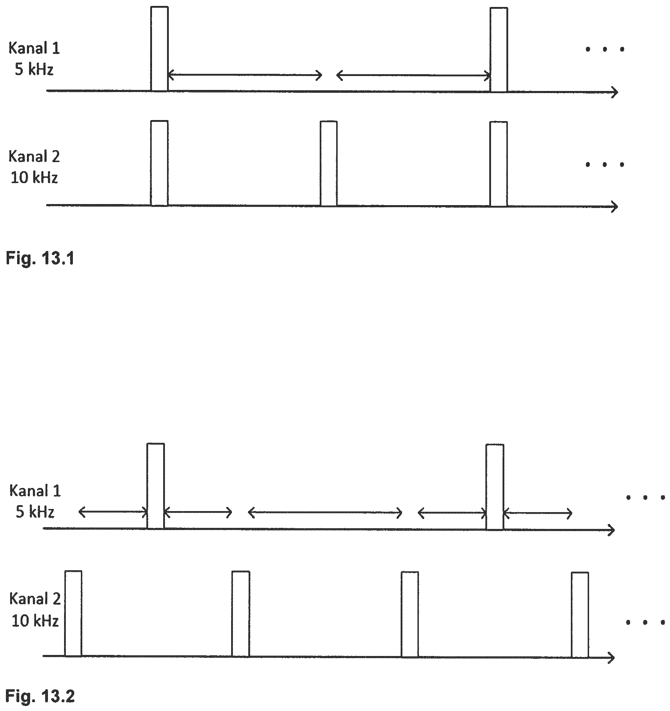

Fig. 13.1 und Fig. 13.2 zeigen ein Beispiel einer optimierten Pulsfolge für "second trip" Korrektur mit unterschiedlichen PRFs.

Fig. 13.1 zeigt eine nicht optimierte Pulsfolge für Kanal 1 und Kanal 2. Der mittlere Pulsabstand beträgt ca. $(100\mu s+100\mu s)/2 = 100\mu s$. Fig. 13.2 zeigt optimierte Pulsabstände der minimalen mittleren Zeit von ca. $(50\mu s+100\mu s+50\mu s)/3= 66\mu s$. Dadurch wir die spontane Emission ASE (Amplified spontaneous emission) im Faserverstärker reduziert und die Pulsenergie und somit die Performance des Gesamtsystems gesteigert. In diesem Beispiel arbeitet der Verstärker optimal bei ca. 15 kHz.

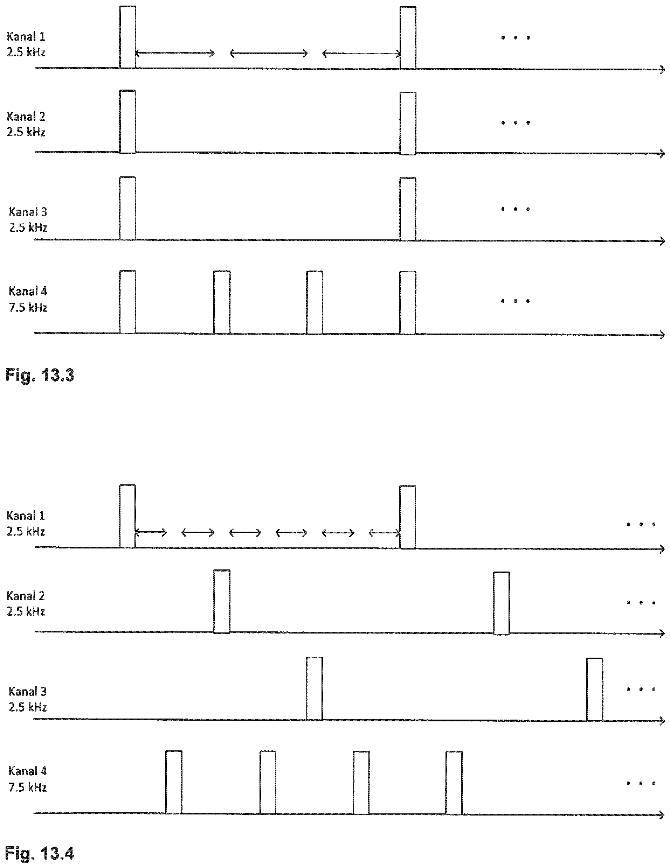

Fig. 13.3 und Fig. 13.4 zeigen ein Beispiel einer optimierten Pulsfolge zur Reduktion der "Blind Range" mit unterschiedlichen PRFs und Pulslängen für beispielsweise 4 Kanäle.

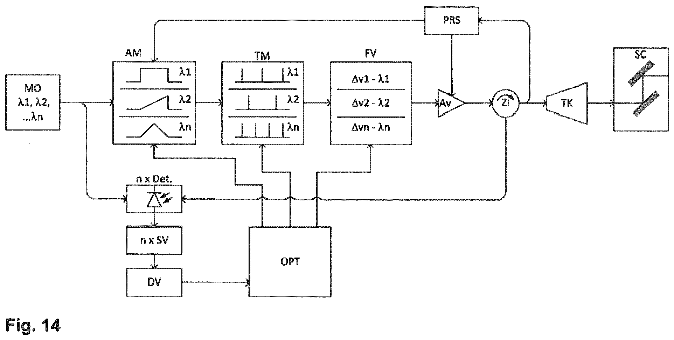

Wie Fig.13.2 zeigt, liegt eine eindeutige Reichweite von 60 km vor, aber der optische Verstärker ist schlecht geseedet (7,5 kHz). Fig. 13.2 zeigt eine eindeutige Reichweite von 60 km, wobei nunmehr der optische Verstärker optimiert geseedet (15 kHz) ist. Fig. 14 zeigt ein viertes Ausführungsbeispiel der Erfindung mit einer automatischen (Selbst-)Optimierung der Wellenform. Das Doppler Lidar, welches der Gegenstand der Erfindung ist, verwendet mehrere Kanäle N, wobei die individuelle Pulsform der Kanäle bzw. die Wellenform automatisch an die jeweilige Messsituation und Messaufgabe angepasst werden kann. Die Situation kann bestimmt werden durch den aktuellen Zustand der Umwelt (z.B. Aerosoldichte, Wetterlage, Temperatur, Luftdruck, Luftfeuchtigkeit). Das Lidar verwendet seine eigenen Messdaten, um seine Wellenform selbst zu optimieren. Dies geschieht durch einen Optimierer (OPT). Der Optimierer (OPT) ist vorzugsweise ein Rechner mit geeigneter Software, die die Funktionsblöcke Amplitudenmodulation (AM), Timing Modulator (TM) und Frequenzmodulator (FV) kontrollieren kann. Die Software kann aus programmierten Algorithmen, die aufgrund historischer Daten und bekannter physikalischer Zusammenhänge die optimale Wellenform berechnen, eine Ausführung implementieren. Ferner kann eine künstliche Intelligenz eingesetzt werden, die sich selbst trainiert oder die trainiert wird.

Beispielsweise messen kürzere Pulse effektiver bei erhöhter Turbulenz, somit ist bei erhöhter Turbulenz in der Atmosphäre mit kürzeren Pulsen mit höherer PRF mit einer höheren Reichweite zu rechnen. Durch unterschiedliche PRFs kann dann auch noch durch "second trip recovery" die eindeutige Reichweite erhöht werden.

Ein Beispiel für eine Selbstoptimierung ist in Tabelle 3 dargestellt. In dem Fall optimiert sich das Lidar so, dass die Energy Dissipation Rate optimal gemessen wird.

**Tabelle 3 Fallunterscheidung nach "Energy Dissipation Rate" oder "refractive turbulence"**

| EDR o. $Cn^2$ | Pulslänge (FWHM) | Pulsform | eff. PRF |
|---|---|---|---|
| Calm | 1000 ns | Gauß | 15 kHz |
| Weak | 800 ns | 0.75Gauß*0.25Rect | 16 kHz |

(fortgesetzt)

| EDR o. Cn² | Pulslänge (FWHM) | Pulsform | eff. PRF |
|---|---|---|---|
| Middle | 500 ns | 0.25Gauß*0.75Rect | 18 kHz |
| Strong | 300 ns | Rect | 20 kHz |

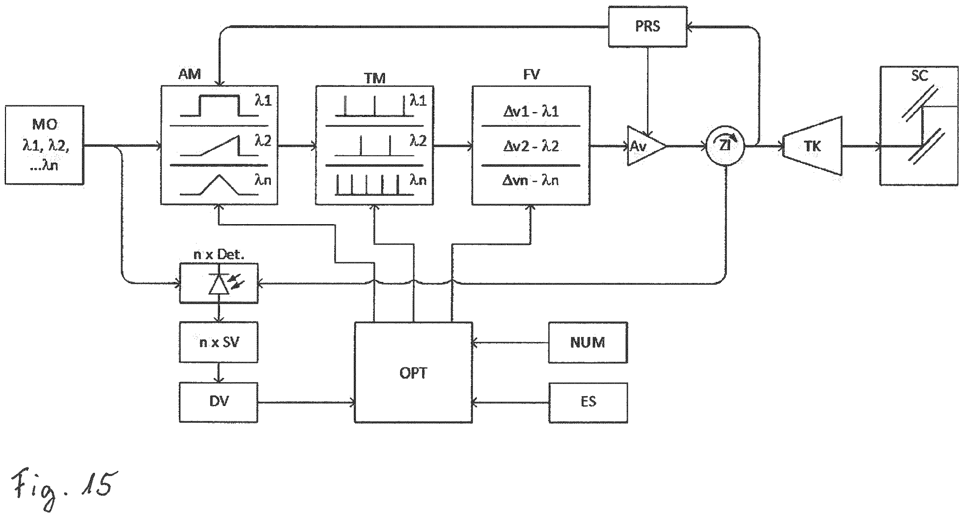

Fig. 15 zeigt ein fünftes Ausführungsbeispiel der Erfindung, bei dem zusätzlich zu der zuvor beschriebenen Selbstoptimierung gemäß dem vierten Ausführungsbeispiel die Optimierung auch unter Zuhilfenahme externer Sensoren (ES) geschehen kann. Neben externen Sensoren (ES) können auch von numerischen Modellen (NUM) Daten an den Optimierer (OPT) geliefert werden.

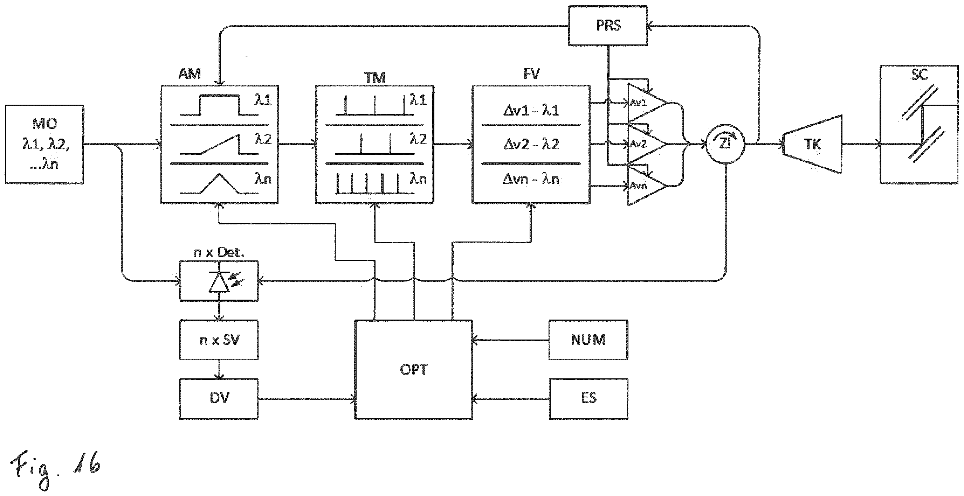

Fig. 16 zeigt ein sechstes Ausführungsbeispiel der Erfindung, bei dem zusätzlich zu der Ausbildung des Doppler Lidar gemäß dem fünften Ausführungsbeispiel individuelle Verstärker (A1), (A2) bis (An) für jeden Kanal vorgesehen sind Eine höhere mittlere Leistung und somit eine höhere Empfindlichkeit wird dadurch ermöglicht.

Die Erfindung ermöglicht eine genaue Messung des Windgeschwindigkeitsvektors in Echtzeit mit Hilfe von an Luftmolekülen und Aerosolen rückgestreuten gepulsten Laserstrahlen. Aufgrund des erfindungsgemäßen Aufbaus des Lidar und dem erfindungsgemäßen Auswerteverfahren kann eine große Reichweite erreicht werden, und zwar nur bei geringen Rückstreuintensitäten. Insbesondere die Verwendung unterschiedlicher Pulswiederholfrequenzen/Pulsabständen für jeden Kanal eröffnet vorteilhafte Messsysteme. So bedeutet beispielsweise 2nd trip recovery, dass man in der Lage ist, Überlagerungen rückgängig zu machen bzw. zu verhindern. Wenn man einen Lidarkanal mit niedriger PRF und entsprechend hoher eindeutiger Reichweite laufen lässt, dann kann dieser Ziele in großer Entfernung erfassen, aber man kann die Überlagerung auf den Lidarkanälen mit hoher PRF allenfalls dort rückgängig machen, wo keine 1st trip echoes gemessen wurden.

Neben den Einsätzen am Boden, beispielsweise zur Detektion von Windgeschwindigkeiten, Scherwinden, Turbulenzen und sonstigen Wind- und Wettersituationen, insbesondere an Flughäfen, kann das erfindungsgemäße Doppler Lidar mit gegebenenfalls angepasster Sendepulsleistung beispielsweise an Windrädern und/oder an Bord von Land-, Luft- und/oder Wasserfahrzeugen Verwendung finden.

Zusammenfassend ist auszuführen:

Die Erfindung betrifft ein Doppler Lidar zur Erfassung von Windgeschwindigkeiten mit einer Vorrichtung (MO) zum Erzeugen von gepulstem kohärenten Laserlicht auf N Wellenlängen-Kanälen, wobei separat für jeden einzelnen Wellenlängen-Kanal eine Amplitudenmodulation (AM) zur individuellen Formung des Pulses für jeden Kanal erfolgt, einer Vorrichtung (TK, SC) zur Aussendung von erzeugten, frequenzverschobenen und verstärkten Impulsen des Laserlichts in vorgegebene Raumrichtungen, einem Detektor (n x Det.) zum Empfangen des erzeugten und des rückgestreuten Laserlichts auf N Wellenlängen-Kanälen und einer elektronischen Auswertevorrichtung (n x SV) zum Ermitteln eines Dopplerverschiebungsbetrages zwischen dem Sendelicht und dem Empfangslicht auf N Wellenlängen-Kanälen, wobei den N Wellenlängen-Kanälen ein Timing Modulator (TM) zugeordnet ist zur individuellen Steuerung einer Pulswiederholfrequenz (PRF) und/oder Pulsfolgeperiode (PRT) zusätzlich zur Pulsform für Wellenlängen-Kanäle.

Der Timing Modulator (TM) steuert unterschiedliche Pulswiederholfrequenzen (PRF) und/oder Pulsfolgeperioden (PRT) für jeden der N Wellenlängen-Kanäle.

Individuelle Frequenzmodulatoren zur Frequenzverschiebung (FV) sind vorgesehen, sodass die erzeugten Impulse oder Impulssequenzen separat für jeden der N Wellenlängen-Kanäle frequenzverschiebbar sind.

Das Laserlicht wird mit einer Frequenz f (T) als Sendelicht in die Atmosphäre abgestrahlt und mit einer Frequenz f(R) als Empfangslicht, das durch Streuen des Laserlichts aufgrund in der Atmosphäre vorhandenen Aerosols empfangen wird, um dadurch eine Windgeschwindigkeit des Luftstroms in einem entfernten Bereich zu ermitteln.

Für eine automatische Optimierung der individuellen Pulsform der N-Wellenlängen-Kanäle ist ein Optimierer (OPT) vorgesehen, der meteorologische Phänomene wie Winde, Windscherungen und Turbulenzen durch mindestens einen externen Sensor (SE) erfasst und die Wellenform an die jeweilige Messsituation anpasst.

Der Optimierer (OPT) ist für eine Selbstoptimierung der Wellenform ausgelegt, wozu die eigenen Messdaten dem Optimierer (OPT) zugeführt werden und dieser einen Steuerzugriff hat auf die Amplitudenmodulation (AM), den Timing Modulator (TM) und/oder die individuellen Frequenzmodulatoren (FV).

Der Optimierer (OPT) ist als Rechner mit eigener Software ausgelegt, wobei die Software aufgrund historischer Daten und physikalischer Zusammenhänge eine optimale Wellenform für die Wellenlängen-Kanäle implementiert.

Eine künstliche Intelligenz zum Anlernen des Optimierers (OPT) ist vorgesehen.

**Patentansprüche**

1. Doppler Lidar zur Erfassung von Windgeschwindigkeiten mit einer Vorrichtung (MO) zum Erzeugen von gepulstem kohärenten Laserlicht auf N Wellenlängen-Kanälen, wobei separat für jeden einzelnen Wellenlängen-Kanal eine Amplitudenmodulation (AM) zur individuellen Formung des Pulses für jeden Kanal erfolgt, einer Vorrichtung (TK, SC) zur Aussendung von erzeugten, frequenzverschobenen und verstärkten Impulsen des Laserlichts in vorgegebene Raumrichtungen, einem Detektor (n x Det.) zum Empfangen des erzeugten und des rückgestreuten Laserlichts auf N Wellenlängen-Kanälen und einer elektronischen Auswertevorrichtung (n x SV) zum Ermitteln eines Dopplerverschiebungsbetrages zwischen dem Sendelicht und dem Empfangslicht auf N Wellenlängen-Kanälen, **dadurch gekennzeichnet, dass** den N Wellenlängen-Kanälen ein Timing Modulator (TM) zugeordnet ist zur individuellen Steuerung einer Pulswiederholfrequenz (PRF) und/oder Pulsfolgeperiode (PRT) zusätzlich zur Pulsform für Wellenlängen-Kanäle.

2. Doppler Lidar nach Anspruch 2, **dadurch gekennzeichnet, dass** der Timing Modulator (TM) unterschiedliche Pulswiederholfrequenzen (PRF) und/oder Pulsfolgeperioden (PRT) .für jeden der N Wellenlängen-Kanäle steuert.

3. Doppler Lidar nach Anspruch 1 oder 2, **dadurch gekennzeichnet, dass** individuelle Frequenzmodulatoren zur Frequenzverschiebung (FV) vorgesehen sind, so dass die erzeugten Impulse oder Impulssequenzen separat für jeden der N Wellenlängen-Kanäle frequenzverschiebbar sind.

4. Doppler Lidar nach einem der Ansprüche 1 bis 3, **dadurch gekennzeichnet, dass** das Laserlicht mit einer Frequenz f (T) als Sendelicht in die Atmosphäre abgestrahlt und mit einer Frequenz f(R) als Empfangslicht, das durch Streuen des Laserlichts aufgrund in der Atmosphäre vorhandenen Aerosols empfangen wird, um dadurch eine Windgeschwindigkeit des Luftstroms in einem entfernten Bereich zu ermitteln.

5. Doppler Lidar nach einem der Ansprüche 1 bis 4, **dadurch gekennzeichnet, dass** für eine automatische Optimierung der individuellen Pulsform der N-Wellenlängen-Kanäle ein Optimierer (OPT) vorgesehen ist, der meterologische Phänomene wie Winde, Windscherungen und Turbulenzen durch mindestens einen externen Sensoren (SE) erfasst und die Wellenform an die jeweilige Messsituation anpasst.

6. Doppler Lidar nach einem der Ansprüche 1 bis 5, **dadurch gekennzeichnet, dass** der Optimierer (OPT) für eine Selbstoptimierung der Wellenform ausgelegt ist, wozu die eigenen Messdaten dem Optimierer (OPT) zugeführt werden und dieser einen Steuerzugriff hat auf die Amplitudenmodulation (AM), den Timing Modulator (TM) und/oder die individuellen Frequenzmodulatoren (FV).

7. Doppler Lidar nach Anspruch 5 oder 6, **dadurch gekennzeichnet, dass** der Optimierer (OPT) als Rechner mit eigener Software ausgelegt ist, wobei die Software aufgrund historischer Daten und physikalischer Zusammenhänge eine optimale Wellenform für die Wellenlängen-Kanäle implementiert.

8. Doppler Lidar nach einem der Ansprüche 5 bis 7, **dadurch gekennzeichnet, dass** eine künstliche Intelligenz zum Anlernen des Optimierers (OPT) vorgesehen ist.

MO          AM          FV          Av          ZI                    Sc

Det.

SV

**Fig. 1**

AM                              FV              PRS              SC

MO
λ1, λ2,          λ1
...λn            λ2                    Δv        Av    ZI    TK
                 λn

n x Det.

n x SV

DV

**Fig. 2**

Fig. 3

Fig. 4

Fig. 5

Fig. 6

P (Wellenlänge 1)

$\tau$

1/PRF$_K$

P (Wellenlänge 2)

1/PRF$_V$    1/PRF$_V$

**Fig. 7**

P (Wellenlänge 1)

$\tau_1$

1/PRF$_K$

P (Wellenlänge 2)

$\tau_2$

1/PRF$_V$

**Fig. 8**

**Fig. 9**

**Fig. 10**

**Fig. 11**

**Fig. 12**

Kanal 1
5 kHz

Kanal 2
10 kHz

**Fig. 13.1**

Kanal 1
5 kHz

Kanal 2
10 kHz

**Fig. 13.2**

**Fig. 13.3**

**Fig. 13.4**

**Fig. 14**

Fig. 15

Fig. 16

21

**EUROPÄISCHER RECHERCHENBERICHT**

Nummer der Anmeldung

EP 22 16 8120

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | TÖWS ALBERT ET AL: "Using multiple wavelengths for more precise detection of atmospheric wind phenomena", 18TH COHERENT LASER RADAR CONFERENCE, 1. Januar 2016 (2016-01-01), Seiten 1-5, XP055917285, * das ganze Dokument * | 1-8 | INV. G01S17/58 G01S17/95 |
| A | TÖWS ALBERT ET AL: "Setup of the four-wavelength Doppler lidar system with feedback controlled pulse shaping", 18TH COHERENT LASER RADAR CONFERENCE, 1. Januar 2016 (2016-01-01), Seiten 1-5, XP055917286, * das ganze Dokument * | 1-8 | |
| A | TÖWS ALBERT ET AL: "Pulse-Shape Control in an All Fiber Multi-Wavelength Doppler Lidar", EPJ WEB OF CONFERENCES, Bd. 119, 1. Januar 2016 (2016-01-01), Seiten 1-4, XP055917287, DOI: 10.1051/epjconf/201611917013 * das ganze Dokument * | 1-8 | |
| A | EP 3 232 226 A1 (MITSUBISHI ELECTRIC CORP [JP]) 18. Oktober 2017 (2017-10-18) * Absätze [0001] – [0013], [0017] – [0085] * * Abbildungen 1-13 * | 1-8 | RECHERCHIERTE SACHGEBIETE (IPC)  G01S |
| A | EP 3 413 087 A1 (MITSUBISHI ELECTRIC CORP [JP]) 12. Dezember 2018 (2018-12-12) * Absätze [0002] – [0011], [0015] – [0133] * * Abbildungen 1-15 * | 1-8 | |

Der vorliegende Recherchenbericht wurde für alle Patentansprüche erstellt

| Recherchenort | Abschlußdatum der Recherche | Prüfer |
|---|---|---|
| München | 22. September 2022 | Kruck, Peter |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 16 8120

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-09-2022

| Im Recherchenbericht angeführtes Patentdokument | Datum der Veröffentlichung | Mitglied(er) der Patentfamilie | Datum der Veröffentlichung |
|---|---|---|---|
| EP 3232226 A1 | 18-10-2017 | CN 107003411 A | 01-08-2017 |
| | | EP 3232226 A1 | 18-10-2017 |
| | | JP WO2016092705 A1 | 27-04-2017 |
| | | US 2017307648 A1 | 26-10-2017 |
| | | WO 2016092705 A1 | 16-06-2016 |
| EP 3413087 A1 | 12-12-2018 | CN 108603939 A | 28-09-2018 |
| | | EP 3413087 A1 | 12-12-2018 |
| | | JP 6362801 B2 | 25-07-2018 |
| | | JP WO2017134821 A1 | 26-07-2018 |
| | | US 2019032635 A1 | 31-01-2019 |
| | | WO 2017134821 A1 | 10-08-2017 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10316762 B4
- DE 102005034729 B3

**In der Beschreibung aufgeführte Nicht-Patentliteratur**

- **IRGANG, TODD D.** Two-channel direct-detection Doppler lidar employing a chargecoupled device as a detector. *Applied Optics,* 20. Februar 2002, vol. 41 (6